# EUROPÄISCHE PATENTSCHRIFT

(11) **EP 2 577 244 B1**
(45) Veröffentlichungstag und Bekanntmachung des Hinweises auf die Patenterteilung: **24.07.2019**
(21) Anmeldenummer: 11770323.1
(22) Anmeldetag: 25.05.2011
(51) Int. Cl.: G01J 5/52

(54) **VORRICHTUNG ZUR RADIOMETRISCHEN KALIBRIERUNG VON INFRAROT-MESSGERÄTEN**
DEVICE FOR THE RADIOMETRIC CALIBRATION OF INFRA-RED MEASURING DEVICES
DISPOSITIF D'ÉTALONNAGE RADIOMÉTRIQUE D'APPAREILS DE MESURE À INFRAROUGE

(30) Priorität: 01.06.2010 DE 102010022361
(43) Veröffentlichungstag der Anmeldung: 10.04.2013
(73) Patentinhaber: HENSOLDT Sensors GmbH, 82024 Taufkirchen (DE)
(72) Erfinder: BARTH, Jochen, 85764 Oberschleißheim (DE)
(74) Vertreter: LifeTech IP Spies & Behrndt Patentanwälte PartG mbB
(86) Internationale Anmeldenummer: PCT/DE2011/001109
(87) Internationale Veröffentlichungsnummer: WO 2012/006985

(56) Entgegenhaltungen:
- DE-A1- 2 626 462
- US-A- 4 317 042

## Beschreibung

Die Erfindung betrifft eine Vorrichtung zur radiometrischen Kalibrierung von Infrarot-Bildsensoren.

Infrarot-Sensoren mit Multi-Element-Detektoren müssen vor Gebrauch kalibriert werden, um Störstrukturen - auch als Fixed Pattern Noise bezeichnet - auf den Sensoren auf ein Maß vergleichbar mit dem zeitlichen Rauschen zu reduzieren. Dazu richtet man den Sensor auf einen Schwarzkörper mit gleichmäßiger Temperatur, misst das Ausgangssignal der Detektorelemente und bestimmt daraus Korrekturkoeffizienten, mit denen die Signale auf denselben Pegel abgeglichen werden. Indem diese Prozedur für verschiedene Schwarzkörper-Temperaturen durchgeführt wird, kann man Korrekturen höherer Ordnung in der Temperatur durchführen. Als Resultat erhält man ein IR-Bild, das in einem weiten Temperaturbereich frei von Artefakten ist.

Temperaturstabilisierte Schwarzkörper sind kommerziell erhältlich. IR-Bildsensoren mit einem großen Gesichtsfeld, z.B. mit einer Fischaugenoptik, können mit Hilfe solcher handelsüblichen, ebenen Schwarzkörperflächen nur abschnittsweise kalibriert werden. Dies ist zeitaufwendig und führt in den Überlappungsbereichen zu Anpassproblemen.

Aus DE 195 31 536 C2 ist eine Vorrichtung zur radiometischen Kalibrierung von IR-Messgeräten bekannt. Bei dieser Anordnung wird eine Metallplatte als Schwarzkörperfläche verwendet. Die Metallplatte ist mit einer Abdeckhaube in Form eines Doms versehen, der innen verspiegelt ist und im Scheitelpunkt eine Öffnung aufweist, welche als Apertur dient. In diese Apertur kann ein zu kalibrierendes IR-Messgerät platziert werden. Durch diese Anordnung wird eine Fläche mit möglichst gleichmäßiger Leuchtdichte erzeugt. Um einen IR-Bildsensor mit großem Gesichtsfeld insgesamt mit Hilfe dieser Vorrichtung zu kalibrieren, muß die Eintrittspupille des Sensors in die Apertur der Vorrichtung gebracht werden. Da aber bei einer weitwinkligen Optik die Eintrittspupille innerhalb der Optik und nicht vor der Frontlinse liegt, sind Abschattungseffekte durch den Bildsensor selbst unvermeidlich und verfälschen die Leuchtdichte für große Bildwinkel. Weitere Schwarzkörperstrahler sind bekannt aus US4317042 A und DE2626462 A1.

Aufgabe der Erfindung ist es, eine Vorrichtung zu schaffen, mit welcher eine gleichmäßige, vom Blickwinkel unabhängige Leuchtdichte erzeugt werden kann, um IR-Bildsensoren auch mit großem Gesichtsfeld in nur einer Aufspannung zu kalibrieren.

Diese Aufgabe wird mit der Vorrichtung gemäß den Merkmalen des Anspruchs 1 gelöst. Vorteilhafte Ausführungen sind Gegenstand von Unteransprüchen.

Die Erfindung wird im Folgenden anhand einer Figur näher erläutert.

Bei der erfindungsgemäßen Vorrichtung dient eine beheizbare Metallfläche als strahlende Fläche I, welche mit einem hochemittierenden Material beschichtet ist. Die strahlende Fläche I ist ferner als Innenoberfläche (Kugelkalotte) eines Kugelsegments 1 ausgeführt. Die Innenseite I des Kugelsegments 1 ist mit dem hochemittierenden Material beschichtet. Der Groß- bzw. Kleinkreis Kugelsegments dient als Apertur A, in dessen Mittelpunkt das zu kalibierende Infrarot-Messgerät 6, z.B. ein Infrarotsensor bringbar ist.

Eine Kugelkalotte, auch Kugelkappe oder Kugelhaube beziehungsweise Kugelsegment oder Kugelabschnitt ist ein abgeflachter Kugelschnitt als flache Kuppel. Im mathematischen Sinne unterscheidet man Kugelsegment als Körper und -kalotte als Fläche. Eine Kugel ist durch den Radius eindeutig bestimmt, eine Kalotte durch Radius und Öffnungswinkel. Bringt man eine Ebene mit einer Kugel zum Schnitt, so heißt die entstehende Schnittlinie Großkreis, wenn die Ebene den Mittelpunkt der Kugel enthält, andernfalls Kleinkreis. Die beiden dabei entstehenden Teilkörper heißen Kugelabschnitt oder Kugelsegment. Die Halbkugel ist also ein Spezialfall des Segments. Der gekrümmte Teil der Oberfläche eines Kugelsegments wird Kugelkappe, Kugelhaube oder Kugelkalotte genannt.

Die Innenseite I des Kugelsegments 1, also die Kugelkalotte wird als Schwarzkörperfläche genutzt. Die Kugelkalotte 1 wird zweckmäßig so gestaltet, dass eine Emissivität nahe 1, erfindungsgemäss >0,9, erzielt wird. Dies wird z.B. dadurch erreicht, dass die Innenoberfläche des Kugelsegments 1 aufgerauht wird und mit einer matt-schwarzen Lackschicht, vorzugsweise handelsüblichen IR-Lack beschichtet wird.

Ferner ist das Kugelsegment 1 vorteilhaft aus Kupfer gefertigt. Im Mittelpunkt der Kugelkalotte wird die Eintrittspupille des zu kalbrierenden Sensors 6 platziert. So erhält man eine perfekte Geometrie zur Kalibirierung von IR-Sensoren beliebiger Bildfeldgröße.

Auf der Außenseite des Kugelsegments sind Mittel 2 zur Temperierung des Kugelsegments aufgelötet. Die Temperiermittel 2 können z.B. eine elektrische Heizung und ein Peltier-Element oder ein Rohr sein, welches im thermischen Kontakt mit dem Kugelsegment 1 steht und durch welches eine temperierbare Flüssigkeit geführt ist. Zur Temperaturregelung der strahlenden Innenoberfläche des Kugelsegments 1 ist an der Außenseite des Kugelsegments 1 ein Thermoelement 3 vorgesehen.

Zur Verbesserung der Dämmung ist die Außenseite der Halbkugel 1 mit einem thermisches Dämmmaterial 5 umfassenden Gehäuse 4 abgeschirmt.

Die sphärisch geformte Kugelkalotte wird vom Sensor aus für jeden Blickwinkel unter demselben Aspektwinkel gesehen, so dass die Geometrie der Kalibrierung unabhängig von Blickwinkel und Bildfeldgröße wird. Selbst wenn die Lage der Eintrittspupille über das Bildfeld variiert, was für Sensoren mit einer Fischaugenoptik in gewissem Maße unvermeidlich ist, ist die dadurch erhaltene Variation der abgestrahlten Leistung auf wenige Prozent beschränkt. Im Vergleich dazu ist bei der Verwendung einer ebenen Schwarzkörperfläche die abgestrahlte Leistung am Bildfeldrand relativ zur Bildfeldmitte auf einem Wert cos²α reduziert, wobei α den halben Bildfeldwinkel bezeichnet, also auf 75% bei 60° Bildwinkel, auf 25% bei 120° oder im Extremfall auf Null bei 180° Bildwinkel. Die Erfindung wird durch die beigefügten Patentansprüche definiert.

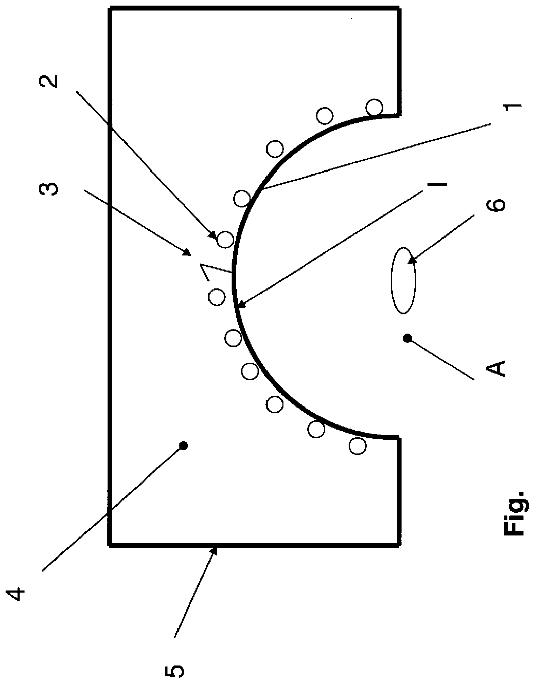

## Patentansprüche

1. Vorrichtung zur radiometrischen Kalibrierung von Infrarot-Messgeräten (6) in Form einer beheizten Metallfläche, welche als strahlende Fläche (I) dient und welche mit einem Material beschichtet ist,
**dadurch gekennzeichnet, dass**
die strahlende Fläche als Innenfläche einer Kugelkalotte eines Kugelsegments (1) ausgeführt ist, welche auf der Innenseite (I) mit dem Material beschichtet ist und auf der Außenseite Mittel (2) zur Temperierung des Kugelsegments (1) aufgelötet sind, wobei der Großkreis des Kugelsegments als Apertur dient, in deren Mittelpunkt das zu kalibrierende Infrarot-Messgerät (6) bringbar ist, wobei die Oberfläche auf der Innenseite (I) des Kugelsegments (1) mit einem Material mit einer Emissivität >0,9 beschichtet ist.

2. Vorrichtung nach Anspruch 1,
**dadurch gekennzeichnet, dass**
die Oberfläche auf der Innenseite (I) des Kugelsegments (1) aufgerauht ist.

3. Vorrichtung nach einem der vorangehenden Ansprüche,
**dadurch gekennzeichnet, dass**
das Kugelsegment (1) aus Kupfer gefertigt ist.

4. Vorrichtung nach einem der vorhergehenden Ansprüchen,
**dadurch gekennzeichnet, dass**
das Temperiermittel (2) im thermischen Kontakt mit dem Kugelsegment (1) steht und aus einer elektrischen Heizung und ein Peltier-Element besteht oder aus einem Rohr, durch welches eine temperierbare Flüssigkeit geführt ist.

5. Vorrichtung nach einem der vorhergehenden Ansprüchen,
**dadurch gekennzeichnet, dass**
ein Thermoelement (3) vorhanden ist, welches in thermischem Kontakt mit dem Kugelsegment (1) steht zur Messung und Regelung der Temperatur der strahlenden Fläche (I).

## Claims

1. Device for the radiometric calibration of infrared measuring instruments (6) in the form of a heated metal surface which serves as a radiating surface (I) and which is coated with a material, **characterized in that** the radiating surface is designed as an inner surface of a spherical dome of a spherical segment (1) which is coated with the material on the inner side (I), and means (2) for controlling the temperature of the spherical segment (1) are soldered onto the outer side, the great circle of the spherical segment serving as an aperture, into the center of which the infrared measuring instrument (6) to be calibrated can be brought, the surface on the inside (I) of the spherical segment (1) being coated with a material having an emissivity of >0.9.

2. Device according to claim 1, **characterized in that** the surface on the inner side (I) of the spherical segment (1) is roughened.

3. Device according to either of the preceding claims, **characterized in that** the spherical segment (1) is made of copper.

4. Device according to any of the preceding claims, **characterized in that** the temperature control means (2) is in thermal contact with the spherical segment (1) and includes an electric heater and a Peltier element or of a tube through which a temperature-controllable liquid is passed.

5. Device according to any of the preceding claims, **characterized in that** a thermocouple (3) is present which is in thermal contact with the spherical segment (1) for measuring and regulating the temperature of the radiating surface (I).

## Revendications

1. Dispositif d'étalonnage radiométrique d'appareils de mesure à infrarouge (6) sous la forme d'une surface métallique chauffée qui sert de surface rayonnante (I) et est revêtue d'un matériau, **caractérisé en ce que** la surface rayonnante est conçue comme surface intérieure d'une calotte sphérique d'un segment sphérique (1), laquelle surface intérieure est revêtue du matériau sur la face intérieure (I), et des moyens (2) permettant de contrôler la température du segment sphérique (1) sont soudés sur la face extérieure, le grand cercle du segment sphérique servant d'ouverture, au centre de laquelle l'appareil de mesure à infrarouge (6) à étalonner peut être amené, la surface sur la face intérieure (I) du segment sphérique (1) étant revêtue d'un matériau présentant une émissivité > 0,9.

2. Dispositif selon la revendication 1, **caractérisé en ce que** la surface sur la face intérieure (I) du segment sphérique (1) est rendue rugueuse.

3. Dispositif selon l'une des revendications précédentes, **caractérisé en ce que** le segment sphérique (1) est en cuivre.

4. Dispositif selon l'une des revendications précédentes, **caractérisé en ce que** le moyen de régulation de la température (2) est en contact thermique avec le segment sphérique (1) et se compose d'un chauffage électrique et d'un élément Peltier ou d'un tube par lequel un liquide à température réglable est conduit.

5. Dispositif selon l'une des revendications précédentes, **caractérisé en ce qu'**un thermocouple (3) est présent, lequel est en contact thermique avec le segment sphérique (1) pour mesurer et régler la température de la surface rayonnante (I).
